# EUROPEAN PATENT APPLICATION

(11) **EP 4 836 246 A1**
(43) Date of publication of application: **04.11.2026**
(21) Application number: 24912198.9
(22) Date of filing: 29.11.2024
(51) Int. Cl.: H02K 1/276

(54) **ROTOR AND MOTOR**

(30) Priority: 26.12.2023 JP 2023219167
(71) Applicant: PANASONIC INTELLECTUAL PROPERTY MANAGEMENT CO., LTD., Kadoma-shi, Osaka 571-0057 (JP)
(72) Inventor: FURUKAWA, Keizo, Osaka 571-0057 (JP); HASHIZUME, Naohiro, Osaka 571-0057 (JP); NANBU, Yasuo, Osaka 571-0057 (JP)
(74) Representative: SSM Sandmair
(86) International application number: PCT/JP2024/042367
(87) International publication number: WO 2025/142308

(57) **Abstract**

A rotor includes a rotary shaft, a rotor core through which the rotary shaft is inserted, and a plurality of magnets disposed inside the rotor core and annularly arranged around the rotary shaft, wherein the rotor core includes an inner core through which the rotary shaft penetrates, and an outer core positioned on an outer side in a radial direction with respect to the inner core and holding the plurality of magnets, the outer core includes a plurality of first cores annularly arranged around the rotary shaft, and a pair of second cores sandwiching the plurality of first cores from an axial direction of the rotary shaft, each of the plurality of magnets is inserted into a gap between two adjacent first cores of the plurality of first cores, and each of the pair of second cores includes a plurality of core parts corresponding to the plurality of first cores on a one-to-one basis, and a plurality of coupling parts sequentially coupling two adjacent core parts of the plurality of core parts.

## Description

### TECHNICAL FIELD

The present disclosure relates to a rotor and a motor including the rotor.

### BACKGROUND ART

Motors are used in various electric devices such as household devices and industrial devices. For example, a fan motor in which a rotary fan is attached to a rotary shaft of a motor is used in an air conditioning unit.

As a motor, an interior permanent magnet (IPM) motor having a permanent magnet-embedded rotor in which a plurality of permanent magnets are embedded in a rotor core is known. The IPM motor can acquire not only magnet torque generated by the permanent magnets, but also reluctance torque due to uneven magnitude of magnetic resistance generated in the iron core. Thus, the IPM motor can realize a small-sized motor having high efficiency.

Conventionally, there has been known an IPM motor including a rotor having a rotor core including an inner core through which a rotary shaft is inserted and an outer core holding a plurality of permanent magnets (see PTL 1, for example). In the IPM motor disclosed in PTL 1, the outer core is split into a plurality of portions. By configuring the outer core by a plurality of split cores (magnetic pole parts) separated from each other like this, the yield of the material can be improved, and the material cost can be suppressed.

However, when the outer core is split into a plurality of split cores as in the IPM motor disclosed in PTL 1, the number of components increases as compared with a rotor core including an outer core having a configuration in which a magnetic pole part is annularly formed in a continuous manner. Thus, it is necessary to provide a gap in consideration of assembly workability between the split cores in addition to tolerance of single split core, and thus, assembly accuracy of the rotor degrades. As a result, the cogging torque and the torque ripple are affected, and the performance of the motor degrades.

### Citation List

### Patent Literature

PTL 1: Unexamined Japanese Patent Publication No. 2023-92367

### SUMMARY OF THE INVENTION

The present disclosure has been made to solve such a problem. An object of the present disclosure is to provide a rotor and a motor capable of suppressing a decrease in assembly accuracy as well as suppressing material cost.

To achieve the above-described object, one aspect of a rotor according to the present disclosure includes a rotary shaft, a rotor core through which the rotary shaft is inserted, and a plurality of magnets disposed inside the rotor core and annularly arranged around the rotary shaft, wherein the rotor core includes an inner core through which the rotary shaft penetrates, and an outer core positioned on an outer side in a radial direction with respect to the inner core and holding the plurality of magnets, the outer core includes a plurality of first cores annularly arranged around the rotary shaft, and a pair of second cores sandwiching the plurality of first cores from an axial direction of the rotary shaft, each of the plurality of magnets is inserted into a gap between two adjacent first cores of the plurality of first cores, and each of the pair of second cores includes a plurality of core parts corresponding to the plurality of first cores on a one-to-one basis, and a plurality of coupling parts sequentially coupling two adjacent core parts of the plurality of core parts.

The plurality of coupling parts preferably include a first coupling part that couples ends of the two adjacent core parts, the ends being positioned on an inner side in the radial direction.

The first coupling part is preferably positioned outside with respect to an upper end of the inner core in the axial direction of the rotary shaft.

The first coupling part is preferably positioned on an opposite side from the side where the inner core is positioned with respect to an end surface of the inner core in the axial direction of the rotary shaft, and the first coupling part is preferably positioned on an outer peripheral side with respect to an inner side surface of the inner core in a radial direction intersecting the axial direction.

The plurality of coupling parts preferably further include a second coupling part that couples ends of two adjacent core parts, the ends being positioned on the outer side in the radial direction.

Each of the plurality of first cores preferably includes a first protrusion protruding in a circumferential direction from an end positioned on the outer side in the radial direction.

Each of the plurality of first cores preferably further includes a second protrusion protruding in the circumferential direction from an end positioned on an inner side in the radial direction.

Each of the plurality of first cores may have no protrusion protruding in the circumferential direction from an end positioned on an inner side in the radial direction.

The inner core and the outer core are preferably integrally formed of resin, and a recess and protrusion are preferably formed on an outer peripheral surface of the inner core along a circumferential direction.

The recess formed on the outer peripheral surface of the inner core is preferably positioned to face an end of each of the plurality of first cores, the ends being positioned on an inner side in the radial direction, and the protrusion formed on the outer peripheral surface of the inner core is preferably positioned to face each of the plurality of magnets inserted into the gap between two adjacent first cores of the plurality of first cores.

The outer peripheral surface of the inner core is preferably provided with a cutout for determining a position of a mold pin when the inner core and the outer core are integrally molded with the resin.

One aspect of a motor according to the present disclosure includes the rotor and a stator that generates a magnetic force that acts on the rotor.

According to the present disclosure, it is possible to suppress a decrease in assembly accuracy as well as suppressing material cost.

### BRIEF DESCRIPTION OF THE DRAWINGS

Fig. 1 is an external perspective view of a motor according to an exemplary embodiment.
Fig. 2 is a sectional view of the motor according to the exemplary embodiment.
Fig. 3 is a perspective view of the rotor according to the exemplary embodiment.
Fig. 4 is an exploded perspective view of the rotor according to the exemplary embodiment.
Fig. 5 is a sectional view of the rotor according to the exemplary embodiment.
Fig. 6 is a sectional view of the rotor taken along line VI-VI in Fig. 5.
Fig. 7 is a sectional view of the rotor taken along line VII-VII in Fig. 5.
Fig. 8 is an exploded perspective view of an outer core used for a rotor core in the rotor according to the exemplary embodiment.
Fig. 9 is a plan view of a first core in the outer core used in the rotor core according to the exemplary embodiment.
Fig. 10 is a sectional perspective view of the rotor according to the exemplary embodiment.
Fig. 11 is a perspective view of an outer core in a rotor core of a comparative example.
Fig. 12 is a plan view of a first core in an outer core of a rotor core according to a modification.
Fig. 13 is a 1/4 sectional view of the rotor according to the exemplary embodiment.
Fig. 14 is a 1/4 sectional view of a rotor according to a modification.

### DESCRIPTION OF EMBODIMENT

Hereinafter, exemplary embodiments of the present disclosure will be described with reference to the drawings. Each of the exemplary embodiments described below illustrates a specific example of the present disclosure. Thus, numerical values, shapes, materials, constituent elements, arrangement positions and connection forms of the constituent elements, and the like illustrated in the following exemplary embodiments are illustrative and are not intended to limit the present disclosure. Among the constituent elements in the following exemplary embodiments, the constituent elements that are not recited in the independent claim representing the most generic concept of the present disclosure are described as optional constituent elements.

Each drawing is a schematic diagram, and is not necessarily strictly illustrated. Thus, scales and the like are not necessarily matched in the drawings. In all the drawings, substantially the same components are denoted by the same reference numerals, and redundant description will be omitted or simplified.

In the present description, the terms "up" and "down" do not necessarily indicate an upward direction (vertically above) and a downward direction (vertically below), respectively, in terms of absolute spatial recognition. In the present exemplary embodiment, for convenience, the directions in which shaft center C of rotary shaft 10 extends are defined as upward-downward directions. However, the upward-downward directions may differ from the actual upward-downward directions depending on the use state of motor 1, or the like. In the present exemplary embodiment, a radial direction of stator 2 and rotor 3 is referred to as a "radial direction", and a rotation direction of rotor 3 is referred to as a "circumferential direction". That is, a direction orthogonal to shaft center C about shaft center C of rotary shaft 10 of rotor 3 is the "radial direction", and a direction around shaft center C about shaft center C of rotary shaft 10 is the "circumferential direction". The directions in which shaft center C of rotary shaft 10 extends (a longitudinal direction of rotary shaft 10) are "axial directions".

### (Exemplary embodiment)

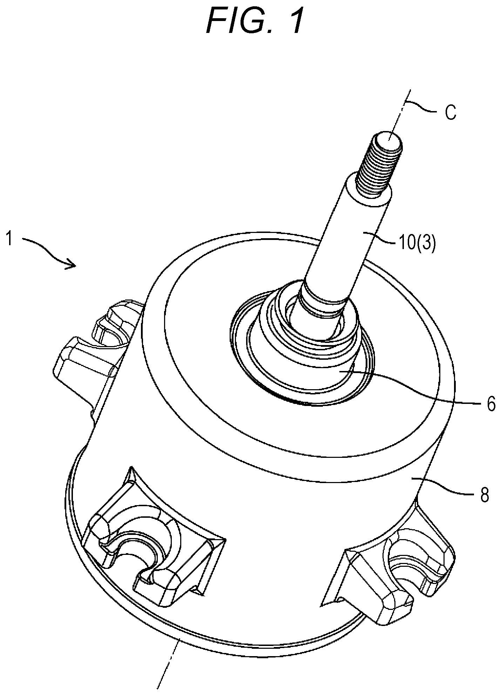

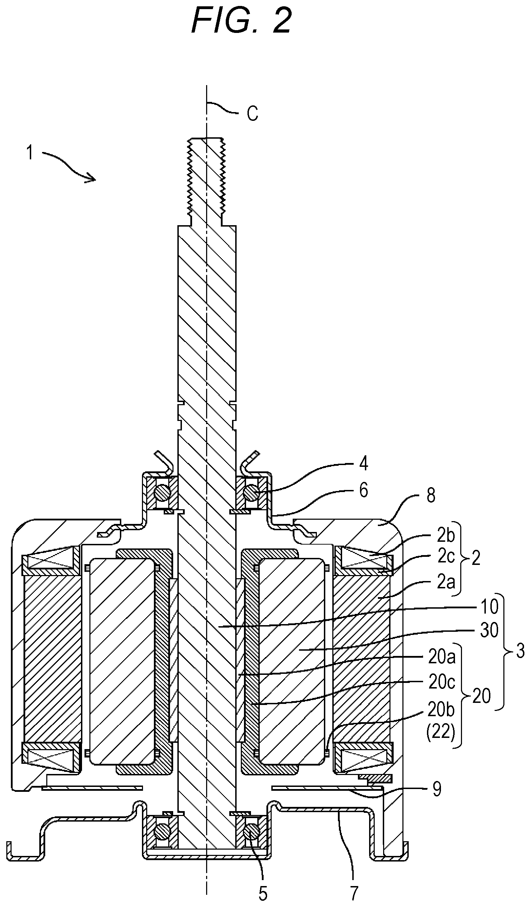

A configuration of motor 1 according to an exemplary embodiment will be described with reference to Figs. 1 and 2. Fig. 1 is an external perspective view of motor 1 according to the exemplary embodiment. Fig. 2 is a sectional view of motor 1 according to the exemplary embodiment.

As illustrated in Fig. 2, motor 1 includes stator 2 and rotor 3 disposed facing stator 2. Motor 1 further includes first bearing 4 and second bearing 5, and first bracket 6 and second bracket 7.

As illustrated in Figs. 1 and 2, motor 1 is a molded motor in which stator 2 is covered with molding resin 8. Motor 1 is a brushless motor that does not use a brush.

As illustrated in Fig. 2, stator 2 is disposed to be opposed to rotor 3 with a minute air gap interposed between the stator and rotor 3. Stator 2 is disposed so as to surround rotor core 20 of rotor 3. That is, motor 1 is an inner rotor type motor in which rotor 3 is disposed inside with respect to stator 2.

Stator 2 generates a magnetic force acting on rotor 3. Specifically, stator 2 is configured such that N poles and S poles are alternately and repeatedly generated in the circumferential direction on an air gap surface with rotor core 20 included in rotor 3. Stator 2 constitutes a magnetic circuit together with rotor 3. Stator 2 includes stator core 2a and winding 2b.

Stator core 2a of stator 2 generates a magnetic force for rotating rotor 3. Stator core 2a is, for example, a stacked body in which a plurality of steel steels are stacked in the directions in which shaft center C of rotary shaft 10 extends. Each of the plurality of steel sheets is a magnetic body. Each of the plurality of steel sheets is, for example, a punched electromagnetic steel sheet formed in a predetermined shape. Stator core 2a is not limited to a stacked body of a plurality of steel sheets. Stator core 2a may be a bulk body made of a magnetic material.

Stator core 2a has a plurality of teeth protruding toward rotor 3. The plurality of teeth are provided so as to protrude toward shaft center C of rotary shaft 10. The plurality of teeth are provided at equal intervals in the circumferential direction while forming a slot between two adjacent teeth. The plurality of teeth radially extend in a direction (radial direction) orthogonal to shaft center C of rotary shaft 10.

Winding 2b is an armature winding of stator 2. Winding 2b is a winding coil wound around stator core 2a as a stator coil. Winding 2b is wound around the plurality of teeth of stator core 2a. Specifically, winding 2b is wound around each of the plurality of teeth with insulator 2c interposed therebetween. That is, a plurality of windings 2b are wound around stator 2. Winding 2b is a concentrated winding coil wound around each tooth. Winding 2b is housed in a slot of stator core 2a.

When winding 2b is energized, a magnetic force is generated from each of the plurality of teeth of stator core 2a. For example, the plurality of windings 2b are electrically connected as three-phase windings such that rotor 3 rotates as a three-phase synchronous motor. That is, motor 1 in the present exemplary embodiment is an interior permanent magnet synchronous motor (IPMSM). In this case, the plurality of windings 2b are constituted by unit coils of three phases of a U-phase, a V-phase, and a W-phase, which are electrically different from each other by 120 degrees. That is, winding 2b attached to each tooth is energized and driven by three-phase alternating current energized in units of U-phase, V-phase, and W-phase. This generates a main magnetic flux of stator 2 in each tooth.

Stator 2 is a molded stator covered with molding resin 8. For example, stator 2 can be covered with molding resin 8 by injection molding. Molding resin 8 covers the outer portion of stator 2 over the entire circumference of stator 2 in the circumferential direction. Specifically, molding resin 8 covers the outer portions of stator core 2a and winding 2b. Molding resin 8 constitutes a housing that encloses rotor 3. Specifically, molding resin 8 is formed in a bottomed cylindrical shape. As illustrated in Fig. 1, molding resin 8 constitutes an outer shell of motor 1.

Molding resin 8 has a plurality of protrusions protruding outward in the radial direction. The protrusion is a leg of motor 1. The protrusion functions as an attachment part for attaching motor 1 to an installation target. Molding resin 8 is made of, for example, an insulating resin material having excellent thermal conductivity, such as a polyester resin or an epoxy resin. Molding resin 8 is made of a thermosetting resin. In the present exemplary embodiment, molding resin 8 is made of unsaturated polyester (Bulk Molding Compound (BMC)) which is a thermosetting resin. Specifically, molding resin 8 is made of white BMC.

As illustrated in Fig. 2, circuit board 9 to which winding 2b of stator 2 is connected is embedded in molding resin 8. In this case, an end of winding 2b of each phase is connected at the winding connection part of circuit board 9. For example, pattern wiring for electrically connecting the plurality of windings 2b for each phase of the U-phase, V-phase, and W-phase is formed on circuit board 9. The end of winding 2b of each phase is electrically connected to the pattern wiring of the circuit board by solder or the like.

Rotor 3 rotates due to a magnetic force generated in stator 2. Specifically, rotor 3 has rotary shaft 10. Rotor 3 rotates about shaft center C of rotary shaft 10.

Rotor 3 generates a magnetic force acting on stator 2. Rotor 3 has a configuration in which a plurality of N poles and S poles, which are main magnetic fluxes, are repeatedly present along the circumferential direction. The direction of the main magnetic flux generated by rotor 3 is a direction (radial direction) orthogonal to the directions in which shaft center C of rotary shaft 10 extends.

As illustrated in Fig. 2, rotor 3 is disposed with respect to stator 2 with an air gap interposed therebetween. Although details will be described later, rotor 3 includes rotary shaft 10, rotor core 20, and magnet 30. Rotor 3 is an IPM rotor in which magnet 30 is embedded in rotor core 20. Thus, motor 1 is an IPM motor.

Rotary shaft 10 of rotor 3 is supported by first bearing 4 and second bearing 5. First bearing 4 and second bearing 5 rotatably support rotary shaft 10 as a pair of bearings. Rotary shaft 10 is held by first bearing 4 and second bearing 5 in a rotatable state in this manner. As a result, rotor 3 is rotatable with respect to stator 2. As an example, first bearing 4 and second bearing 5 are ball bearings. But first bearing 4 and second bearing 5 may be other bearings such as a thrust bearing.

First bearing 4 is held by first bracket 6. First bracket 6 is fixed to one side of molding resin 8 in the directions in which shaft center C of rotary shaft 10 extends. Second bearing 5 is held by second bracket 7. Second bracket 7 is fixed to the other end of molding resin 8 in the directions in which shaft center C of rotary shaft 10 extends.

First bracket 6 and second bracket 7 are made of, for example, a metallic material such as iron. For example, first bracket 6 and second bracket 7 are made of a metal plate having a constant thickness.

In motor 1 configured as described above, when winding 2b of stator 2 is energized, a field current flows through winding 2b to generate a magnetic field. As a result, a magnetic flux directed from stator 2 to rotor 3 is generated. Specifically, the magnetic flux is generated from each of the plurality of teeth of the stator core in stator 2 toward rotor core 20 of rotor 3. On the other hand, in rotor 3, a magnetic flux passing through stator 2 is generated from magnet 30 embedded in rotor core 20. The magnetic force generated through the interaction between the magnetic flux generated in stator 2 and magnetic flux generated from magnet 30 of rotor 3 becomes a torque for rotating rotor 3, and rotor 3 rotates.

Motor 1 is used, for example, in an air conditioning unit such as an air conditioner. Specifically, motor 1 is mounted on an outdoor unit of an air conditioning unit as a fan motor in which a rotary fan is attached to rotary shaft 10.

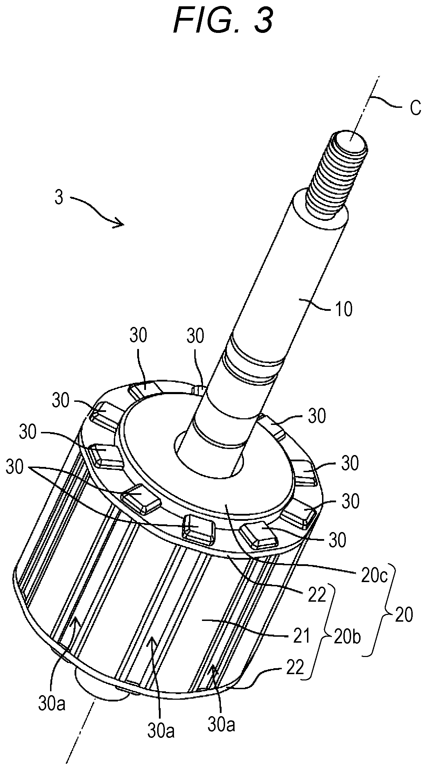

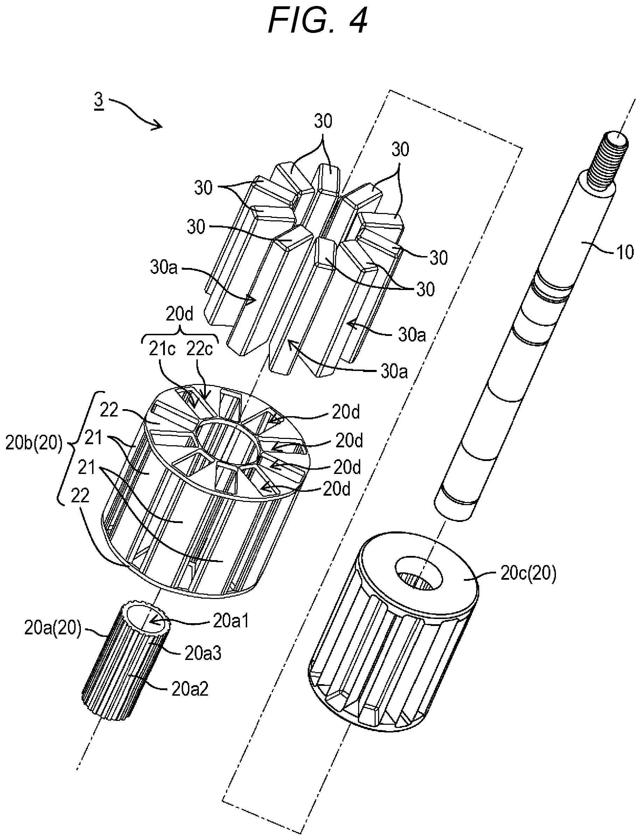

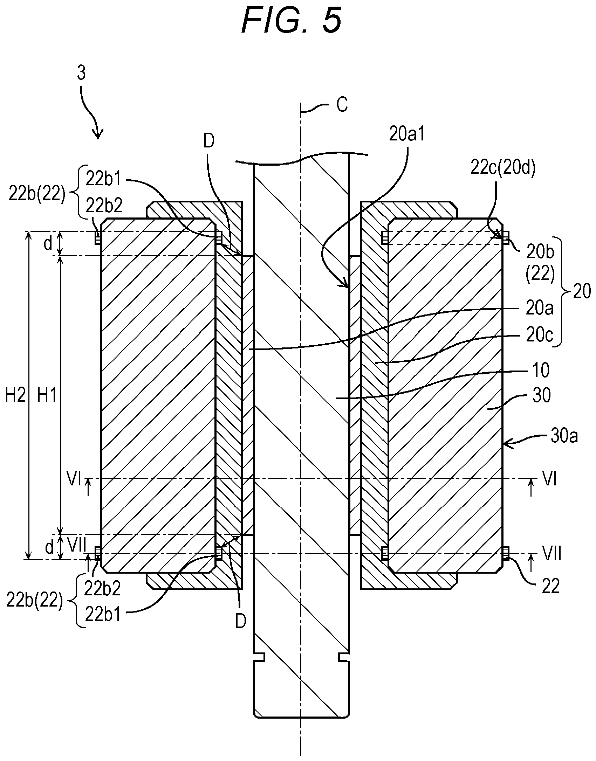

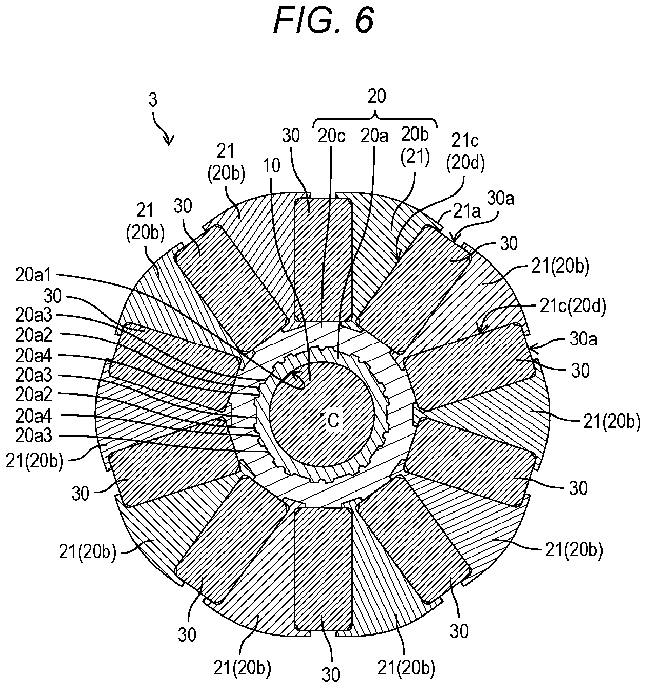

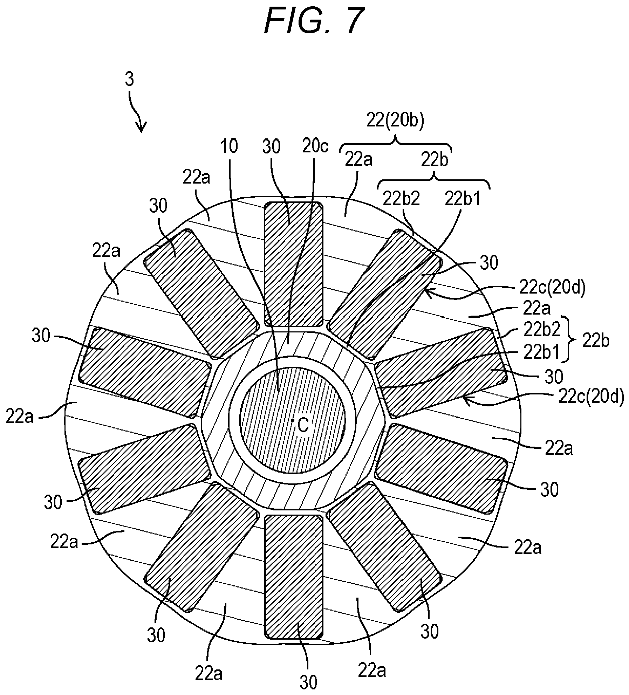

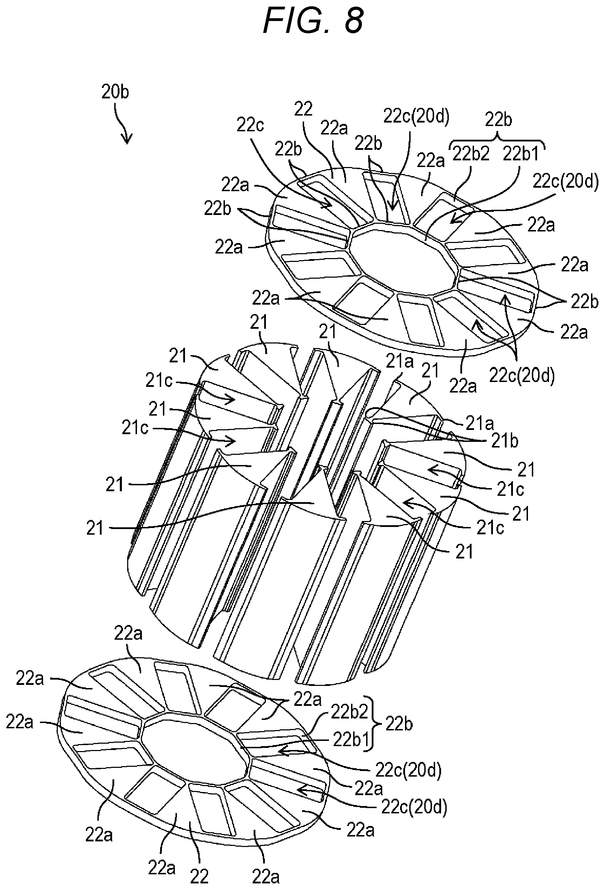

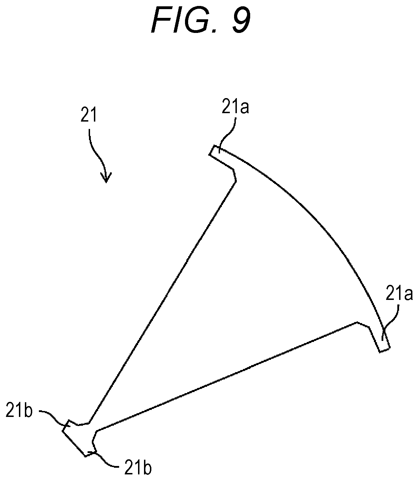

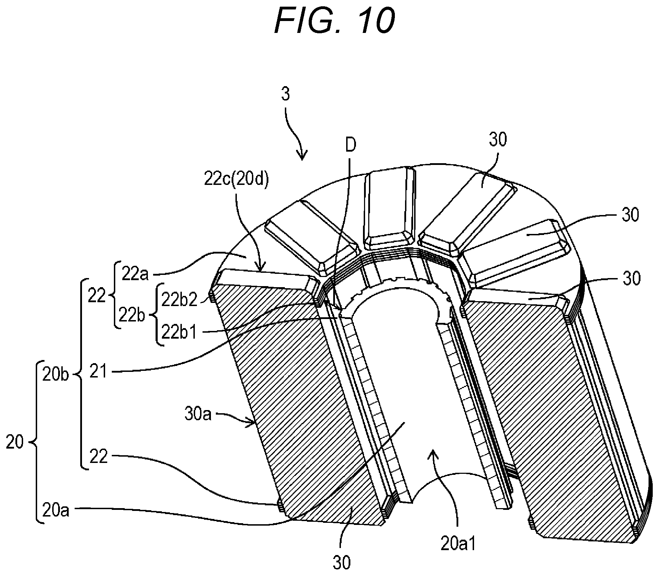

Next, a detailed configuration of rotor 3 will be described by using Figs. 3 to 10 with reference to Fig. 2. Fig. 3 is a perspective view of rotor 3 according to the exemplary embodiment. Fig. 4 is an exploded perspective view of rotor 3. Fig. 5 is a sectional view of rotor 3 according to the exemplary embodiment. Fig. 6 is a sectional view of rotor 3 taken along line VI-VI in Fig. 5. Fig. 7 is a sectional view of rotor 3 taken along line VII-VII in Fig. 5. Fig. 8 is an exploded perspective view of outer core 20b used for rotor core 20 in rotor 3 according to the exemplary embodiment. Fig. 9 is a plan view of first core 21 in outer core 20b used for rotor core 20 according to the exemplary embodiment. Fig. 10 is a sectional perspective view of rotor 3 according to the exemplary embodiment. In Fig. 10, resin 20c in rotary shaft 10 and rotor core 20 is omitted.

As illustrated in Figs. 2 to 5, rotor 3 includes rotary shaft 10, rotor core 20 through which rotary shaft 10 is inserted, and a plurality of magnets 30 held by rotor core 20.

Rotary shaft 10 has shaft center C which becomes the center when rotor 3 rotates. Rotary shaft 10 extends in a direction of shaft center C. Rotary shaft 10 is an elongated shaft. Rotary shaft 10 is a metal rod made of a metallic material such as steel use stainless (SUS). Rotary shaft 10 is fixed to rotor core 20. Specifically, rotary shaft 10 penetrates rotor core 20. Rotary shaft 10 is fixed to rotor core 20 so as to extend on both sides of rotor core 20 in the directions in which shaft center C extends.

As illustrated in Fig. 2, one end of rotary shaft 10 protrudes to the outside from the through hole of first bracket 6. A portion of rotary shaft 10 protruding from first bracket 6 serves as an output shaft. For example, a load such as a rotary fan is attached to one end of rotary shaft 10.

The other end of rotary shaft 10 does not protrude from second bracket 7 to the outside. However, the other end of rotary shaft 10 may protrude from second bracket 7 to the outside. That is, both ends of rotary shaft 10 may protrude from first bracket 6 and second bracket 7, respectively.

As illustrated in Fig. 2, rotor core 20 is disposed with respect to stator core 2a of stator 2 with an air gap interposed therebetween. As illustrated in Figs. 4 to 7, rotor core 20 includes inner core 20a and outer core 20b. As illustrated in Figs. 5 and 6, inner core 20a holds rotary shaft 10. Outer core 20b holds the plurality of magnets 30.

Inner core 20a is positioned on the inner side in the radial direction with respect to outer core 20b. That is, inner core 20a is an inner core positioned inside with respect to outer core 20b.

Rotary shaft 10 penetrates inner core 20a. Rotary shaft 10 is fixed to inner core 20a. Specifically, through hole 20a1 is formed in inner core 20a. Rotary shaft 10 is fixed to inner core 20a by being press-fitted or shrink-fitted into through hole 20a1. As illustrated in Fig. 4, inner core 20a is a cylindrical member having a cylindrical shape as a whole.

As illustrated in Figs. 5 and 6, outer core 20b is positioned on the outer side in the radial direction with respect to inner core 20a. That is, outer core 20b is an outer core positioned outside with respect to inner core 20a. Specifically, outer core 20b surrounds inner core 20a.

Inner core 20a and outer core 20b are integrally molded by resin 20c. Specifically, by injection molding inner core 20a and outer core 20b, inner core 20a and outer core 20b are molded with resin 20c. Thus, resin 20c is present as a molding resin between inner core 20a and outer core 20b. The shape of resin 20c in the portion present between inner core 20a and outer core 20b is substantially cylindrical.

As illustrated in Figs. 3 and 5, resin 20c not only fills the space between inner core 20a and outer core 20b, but also covers the portion positioned on the inner side in the radial direction of each of rotor core 20 and magnet 30. Resin 20c in the portion covering the portion positioned on the inner side in the radial direction of rotor core 20 and magnet 30 is a lid formed in a disk shape having a through hole. To adjust the balance of rotor 3, a groove or a hole may be provided in the lid of resin 20c. To improve heat dissipation, a structure such as a fin may be provided on the lid of resin 20c.

Resin 20c is made of, for example, an insulating resin material having excellent thermal conductivity, such as a polyester resin or an epoxy resin. Resin 20c is made of a thermosetting resin. In the present embodiment, resin 20c is made of black BMC. Resin 20c may be made of poly butylene terephthalate (PBT) instead of BMC.

As illustrated in Fig. 6, a knurled uneven portion is formed along the circumferential direction on the outer peripheral surface of inner core 20a. Specifically, protrusion 20a2 and recess 20a3 are alternately formed at equal intervals over the entire circumference of the outer peripheral surface of inner core 20a. Thus, the surface area of inner core 20a can be increased, and resin 20c enters recess 20a3. Thus, resin 20c can be firmly fixed to inner core 20a because of the anchor effect. As a result, it is possible to prevent inner core 20a from being displaced from resin 20c and idling when torque is applied. In the present exemplary embodiment, 10 protrusions 20a2 and 10 recesses 20a3 are provided on the outer peripheral surface of inner core 20a. As illustrated in Figs. 2 and 6, each protrusion 20a2 and each recess 20a3 extend along the cylinder axis of cylindrical inner core 20a.

The plurality of recesses 20a3 formed on the outer peripheral surface of inner core 20a are positioned to face ends of the plurality of first cores 21 in outer core 20b, the ends being positioned on the inner side in the radial direction, respectively. Each of the plurality of protrusions 20a2 formed on the outer peripheral surface of inner core 20a faces a corresponding one of the plurality of magnets 30 inserted into the gaps between two adjacent first cores 21 in the plurality of first cores 21.

As illustrated in Fig. 6, cutout 20a4 is provided on the outer peripheral surface of inner core 20a. Cutout 20a4 is cut out so as to dent a part of protrusion 20a2. As an example, cutout 20a4 is cut out so as to have an arc shape in plan view. Cutout 20a4 extends along the cylinder axis of cylindrical inner core 20a similarly to protrusion 20a2 and recess 20a3. Cutout 20a4 is a recess for determining the position of a mold pin when inner core 20a and outer core 20b are integrally molded with resin 20c. Specifically, a mold pin abuts on cutout 20a4. By providing cutout 20a4 for positioning on the outer peripheral surface of inner core 20a like this, inner core 20a and outer core 20b can be easily positioned in the rotation direction.

Each of inner core 20a and outer core 20b is a stacked body in which a plurality of steel sheets as magnetic bodies are stacked in the directions in which shaft center C of rotary shaft 10 extends. Each of the plurality of steel sheets in each of inner core 20a and outer core 20b is, for example, a punched electromagnetic steel sheet formed in a predetermined shape. In each of inner core 20a and outer core 20b, the plurality of steel sheets are fixed to each other by crimping or welding, for example. Inner core 20a and outer core 20b are fixed to each other by resin 20c interposed between inner core 20a and outer core 20b. The steel sheets constituting each of inner core 20a and outer core 20b may be simultaneously formed by simultaneously punching one steel sheet, for example. That is, the steel sheets constituting inner core 20a and the steel sheets constituting outer core 20b may be taken together using the same mold. This can improve production cost and assembly takt. In addition, it is also possible to simplify a mold structure when inner core 20a and outer core 20b are molded with resin 20c.

As illustrated in Figs. 3, 4, and 8, outer core 20b includes a plurality of first cores 21 and a pair of second cores 22 sandwiching the plurality of first cores 21 from the directions in which shaft center C of rotary shaft 10 extends. The shape of first core 21 is different from the shape of second core 22. That is, outer core 20b includes two types of cores of first core 21 and second core 22 having different shapes.

The plurality of first cores 21 are the main magnetic pole part in outer core 20b. Thus, the thickness of one first core 21 (height in the directions in which shaft center C of rotary shaft 10 extends) is larger than the thickness of one second core 22. Specifically, the number of steel sheets constituting first core 21 is larger than the number of steel sheets constituting second core 22. As an example, when the steel sheet constituting each of first core 21 and second core 22 has a thickness of 0.5 mm, first core 21 is constituted by 96 steel sheets (thickness 48 mm), and second core 22 is constituted by 4 steel sheets (thickness 2 mm). One of the purposes of second core 22 is to secure the strength of entire outer core 20b, and thus, the smaller the number of steel sheets used for second core 22, the better.

Each of the plurality of first cores 21 constitutes a magnetic pole part of rotor core 20. As illustrated in Fig. 6, the plurality of first cores 21 is annularly arranged around rotary shaft 10. The plurality of first cores 21 are split cores disposed separately from each other in the circumferential direction. In the present exemplary embodiment, 10 first cores 21 are annularly arranged. The plurality of first cores 21 have the same shape and size. That is, each of the plurality of first cores 21 is the same component. As illustrated in Fig. 9, each of the plurality of first cores 21 has a substantially fan shape in plan view. In this case, as illustrated in Fig. 6, the plurality of first cores 21 each having a substantially fan shape are disposed so as to form a circle as a whole.

As illustrated in Figs. 6 and 8, the plurality of first cores 21 are disposed such that gap 21c is present between two adjacent first cores 21. Each of the plurality of magnets 30 is inserted into gap 21c. That is, gap 21c constitutes a part of magnet insertion hole 20d in rotor core 20.

As illustrated in Figs. 6 and 8, each of the plurality of first cores 21 has first protrusion 21a protruding in the circumferential direction from the end positioned on the outer side in the radial direction. First protrusion 21a is an outer protrusion provided at the outer peripheral end of first core 21. Magnet 30 is prevented from falling off outer core 20b by second coupling part 22b2 of second core 22. However, by providing first protrusion 21a in first core 21, it is possible to further prevent magnet 30 from falling off outer core 20b. That is, first protrusion 21a is a magnet holding protrusion for holding magnet 30 in outer core 20b, and functions as a stopper for preventing magnet 30 from popping out from outer core 20b.

Each of the plurality of first cores 21 has second protrusion 21b protruding in the circumferential direction from the end positioned on the inner side in the radial direction. Second protrusion 21b is an inner protrusion provided at the inner peripheral end of first core 21. When inner core 20a and outer core 20b are integrally molded with resin 20c, magnet 30 inserted into magnet insertion hole 20d is prevented from falling off outer core 20b by first coupling part 22b1 of second core 22. However, by providing second protrusion 21b in first core 21, magnet 30 can be easily inserted into gap 21c between two adjacent first cores 21, and inserted magnet 30 can be easily held in gap 21c. That is, the assemblability of rotor core 20 can be improved. In this manner, second protrusion 21b is also a magnet holding protrusion for holding magnet 30 in outer core 20b, and functions as a stopper for preventing magnet 30 from popping out from outer core 20b.

As illustrated in Figs. 7 and 8, each of the pair of second cores 22 sandwiching the plurality of first cores 21 has a spoke shape. Each of the pair of second cores 22 includes a plurality of core parts 22a and a plurality of coupling parts 22b sequentially coupling the plurality of core parts 22a. The plurality of core parts 22a and the plurality of coupling parts 22b are integrally formed. That is, second core 22 can be obtained by stacking a plurality of steel sheets in which the portion corresponding to core part 22a and the portion corresponding to coupling part 22b are formed.

As illustrated in Fig. 8, the plurality of core parts 22a have a one-to-one correspondence with the plurality of first cores 21. Specifically, in plan view, the shape of each of the plurality of core parts 22a is the same as the shape of each of the plurality of first cores 21. The shape in plan view of first core 21 is substantially fan shape, and the shape in plan view of each core part 22a is also substantially fan shape. Each of the plurality of core parts 22a is in contact with a corresponding one of the plurality of first cores 21.

Each of the plurality of coupling parts 22b couples two adjacent core parts 22a in the plurality of core parts 22a. That is, each coupling part 22b is a coupling bridge that couples one and the other of two adjacent core parts 22a. Specifically, each of the plurality of coupling parts 22b couples two core parts 22a adjacent to each other in the circumferential direction.

As illustrated in Figs. 7 and 8, the plurality of coupling parts 22b include first coupling part 22b1 and second coupling part 22b2. That is, two adjacent core parts 22a are coupled by first coupling part 22b1 and second coupling part 22b2. First coupling part 22b1 is positioned on the inner side in the radial direction with respect to second coupling part 22b2. Thus, first coupling part 22b1 is shorter than second coupling part 22b2.

First coupling part 22b1 is provided on the inner side in the radial direction of the side end surface of core part 22a. Specifically, first coupling part 22b1 is an inner coupling part provided at an end of the side end surface of core part 22a, the end being positioned on the inner side in the radial direction. That is, first coupling part 22b1 couples the ends of two adjacent core parts 22a, the ends being positioned on the inner side in the radial direction.

First coupling part 22b1 is positioned on the opposite side from the side where inner core 20a is positioned with respect to the end surface of inner core 20a in the direction of shaft center C of rotary shaft 10. First coupling part 22b1 is positioned on the outer peripheral side with respect to the inner side surface of inner core 20a in the radial direction intersecting the direction of shaft center C of rotary shaft 10.

Second coupling part 22b2 is provided on the outer side in the radial direction of the side end surface of core part 22a. Specifically, second coupling part 22b2 is an outer coupling part provided at the end positioned on the outer side in the radial direction of the side end surface of core part 22a. That is, second coupling part 22b2 couples the ends positioned on the outer side in the radial direction of two adjacent core parts 22a. Second coupling part 22b2 has a linear shape. However, the second coupling part is not limited to this example. For example, second coupling part 22b2 may have an arc shape.

Through hole 22c is formed in second core 22. Through hole 22c is an opening region surrounded by two adjacent core parts 22a, first coupling part 22b1, and second coupling part 22b2. In the present exemplary embodiment, 10 through holes 22c are formed in second core 22.

As illustrated in Fig. 7, magnet 30 is inserted into through hole 22c of second core 22. That is, through hole 22c constitutes a part of magnet insertion hole 20d in rotor core 20, similarly to gap 21c between two adjacent first cores 21. As illustrated in Fig. 4, each of the plurality of magnet insertion holes 20d in rotor core 20 is constituted by through hole 22c of second core 22 and gap 21c between two adjacent first cores 21. The opening shape of through hole 22c of second core 22 is the same as the opening shape of gap 21c.

As illustrated in Figs. 5 and 7, magnet 30 inserted into magnet insertion hole 20d (through hole 22c + gap 21c) is held by rotor core 20 by first coupling part 22b1 and second coupling part 22b2 provided in second core 22. Specifically, the upper end of magnet 30 inserted into magnet insertion hole 20d is sandwiched between first coupling part 22b1 and second coupling part 22b2 in one of the pair of second cores 22. The lower end of magnet 30 inserted into magnet insertion hole 20d is sandwiched between first coupling part 22b1 and second coupling part 22b2 in the other of the pair of second cores 22. By providing first coupling part 22b1 and second coupling part 22b2 in second core 22 like this, magnet 30 inserted in gap 21c between two adjacent first cores 21 can be held by second core 22. That is, first coupling part 22b1 and second coupling part 22b2 function as stoppers for preventing magnet 30 inserted into magnet insertion hole 20d from dropping off from magnet insertion hole 20d.

In the present exemplary embodiment, only the upper end and the lower end of outer side surface 30a (end surface positioned on the outer side in the radial direction of magnet 30) of magnet 30 inserted into magnet insertion hole 20d are held by second coupling parts 22b2 of the pair of second cores 22. Thus, as illustrated in Figs. 3, 5, and 6, a part of outer side surface 30a of magnet 30 is exposed. Specifically, a portion other than the upper end or the lower end of outer side surface 30a of magnet 30 is exposed from rotor core 20. That is, more than half of outer side surface 30a of magnet 30 is exposed.

In rotor core 20 configured as described above, as illustrated in Fig. 5, the length of inner core 20a in the directions in which shaft center C of rotary shaft 10 extends is shorter than the length of outer core 20b in the directions in which shaft center C of rotary shaft 10 extends. That is, when the length of inner core 20a in the directions in which shaft center C of rotary shaft 10 extends is H1, and the length of outer core 20b in the directions in which shaft center C of the rotary shaft 10 extends is H2, H2 > H1 holds. Specifically, both upper and lower ends of outer core 20b are each longer than inner core 20a by distance d (H2 = H1 + 2 × d).

Thus, first coupling part 22b1 of each of the pair of second cores 22 of outer core 20b provided at both ends in the directions in which shaft center C of rotary shaft 10 extends is positioned outside with respect to the upper end of inner core 20a in the directions in which shaft center C of rotary shaft 10 extends. Thus, first coupling part 22b1 in each of the pair of second cores 22 of outer core 20b does not face inner core 20a in the radial direction. As a result, as illustrated in Figs. 5 and 10, first coupling part 22b1 of second core 22 of outer core 20b and the upper end of inner core 20a are separated from each other by distance D in an oblique direction with respect to the directions in which shaft center C of rotary shaft 10 extends.

By making length H1 of inner core 20a and length H2 of outer core 20b different from each other like this, it is possible to increase the distance between outer core 20b and inner core 20a. For example, distance D can be secured to 3 mm or more. As a result, it is possible to suppress the occurrence of electrolytic corrosion between outer core 20b and inner core 20a. By making length H1 of inner core 20a and length H2 of outer core 20b different from each other, it is also possible to suppress the amount of resin 20c used between outer core 20b and inner core 20a.

As illustrated in Figs. 3 and 5 to 7, the plurality of magnets 30 are disposed inside rotor core 20. Specifically, each of the plurality of magnets 30 is inserted into magnet insertion hole 20d of rotor core 20. That is, each of the plurality of magnets 30 is inserted into through hole 22c in second core 22 of outer core 20b of rotor core 20, and is inserted into gap 21c between two adjacent first cores 21 in outer core 20b.

As illustrated in Figs. 6 and 7, the plurality of magnets 30 are annularly arranged around rotary shaft 10. In the present exemplary embodiment, 10 through holes 22c are formed in second core 22 of outer core 20b. Thus, 10 magnets 30 are used. That is, 10 magnets 30 are arranged at equal intervals in the circumferential direction around rotary shaft 10. The plurality of magnets 30 are arranged such that magnetic pole surfaces of the same polarity face each other between two adjacent magnets 30. That is, in two adjacent magnets 30, the magnetic pole surface serving as the S pole of one magnet 30 and the magnetic pole surface serving as the S pole of the other magnet 30 face each other, or the magnetic pole surface serving as the N pole of one magnet 30 and the magnetic pole surface serving as the N pole of the other magnet 30 face each other.

Magnet 30 is a magnetized permanent magnet. The magnetization of magnet 30 may be performed after magnet 30 is inserted into rotor core 20, or may be performed in advance before magnet 30 is inserted into rotor core 20.

Magnet 30 is a substantially rectangular parallelepiped having a plate shape. Magnet 30 has a rectangular shape in plan view. Thus, as illustrated in Figs. 6 and 7, the sectional shape of magnet 30 when the magnet is cut along a plane having shaft center C of rotary shaft 10 as a perpendicular line is rectangular. As illustrated in Fig. 5, the sectional shape of magnet 30 when the magnet is cut along a plane passing through shaft center C of rotary shaft 10 is also rectangular. As illustrated in Figs. 6 and 7, magnet 30 is disposed such that a longitudinal direction comes in a radial direction of rotor core 20 in plan view.

As illustrated in Figs. 5 and 10, magnet 30 protrudes from each of the upper end surface and the lower end surface of outer core 20b in the directions in which shaft center C of rotary shaft 10 extends. Specifically, both ends of magnet 30 in the directions in which shaft center C of rotary shaft 10 extends protrude with respect to the respective main surfaces of the pair of second cores 22. Thus, even when the corners of magnet 30 are chamfered to improve workability when magnet 30 is inserted into magnet insertion hole 20d, and the finishing of the chamfering varies, the chamfered portion of magnet 30 is positioned outside without being positioned inside outer core 20b. Thus, it is possible to suppress variations in magnetic flux due to the chamfered portion of magnet 30. In addition, by protruding magnet 30 from the upper end surface or the lower end surface of outer core 20b, the magnetic flux of magnet 30 can be easily detected by the Hall element disposed near rotor 3.

As illustrated in Figs. 5 to 7, magnet 30 is fixed to rotor core 20 by resin 20c when inner core 20a and outer core 20b are integrally molded. That is, magnet 30 is fixed by resin 20c that has entered gap 21c between two adjacent first cores 21 in outer core 20b. Instead of fixing magnet 30 to outer core 20b by resin 20c, magnet 30 may be fixed to outer core 20b by separately filling an adhesive in a gap between magnet 30 and first core 21.

Magnet 30 is a ferrite magnet made of a sintered ferrite magnet. Magnet 30 is not limited to a ferrite magnet. For example, magnet 30 may be a rare earth magnet. In this case, as magnet 30, a neodymium rare earth magnet containing neodymium, iron, and boron (Nd-Fe-B) as main components can be used.

In outer core 20b of rotor core 20 configured as described above, although the plurality of first cores 21 separated from each other are used, the plurality of first cores 21 are sandwiched by the pair of second cores 22 having the plurality of coupling parts 22b sequentially coupling the plurality of core parts 22a in the circumferential direction. Thus, in outer core 20b, while magnet 30 inserted between the plurality of first cores 21 is held by the plurality of coupling parts 22b, a portion of outer side surface 30a of magnet 30 other than the plurality of coupling parts 22b is exposed from rotor core 20. That is, as illustrated in Figs. 3 and 10, the outer peripheral surface of rotor core 20 has a plurality of openings through which outer side surface 30a of each magnet 30 is exposed. This opening is a region surrounded by two second coupling parts 22b2 of the pair of second cores 22 of outer core 20b and two side end surfaces of two first cores 21 adjacent to each other. The shape of the opening is a slit-shaped rectangle extending along the directions in which shaft center C of rotary shaft 10 extends.

In rotor core 20 configured as described above, outer core 20b can be formed as one component while using the plurality of first cores 21. Moreover, by providing the opening on the outer peripheral surface of rotor core 20 to expose outer side surface 30a of magnet 30 from rotor core 20, it is possible to suppress the loss of the magnetic flux generated in rotor 3 as compared with the case where outer side surface 30a of magnet 30 is not exposed. That is, the output of rotor 3 can be increased. Thus, as magnet 30 used in rotor 3, an inexpensive ferrite magnet having a smaller magnetic force than a rare earth magnet can be used instead of an expensive rare earth magnet having a large magnetic force. That is, even when magnet 30 is a ferrite magnet, rotor 3 capable of obtaining a predetermined output can be realized. Thus, rotor 3 and motor 1 can be obtained at low cost.

By exposing outer side surface 30a of magnet 30 inward in the radial direction, resin 20c enters between magnet 30 and outer core 20b when inner core 20a and outer core 20b are integrally molded with resin 20c by injection molding. Thus, magnet 30 can be more firmly fixed.

Next, characteristics of motor 1 according to the present exemplary embodiment will be described, including the background leading to the technique of the present disclosure.

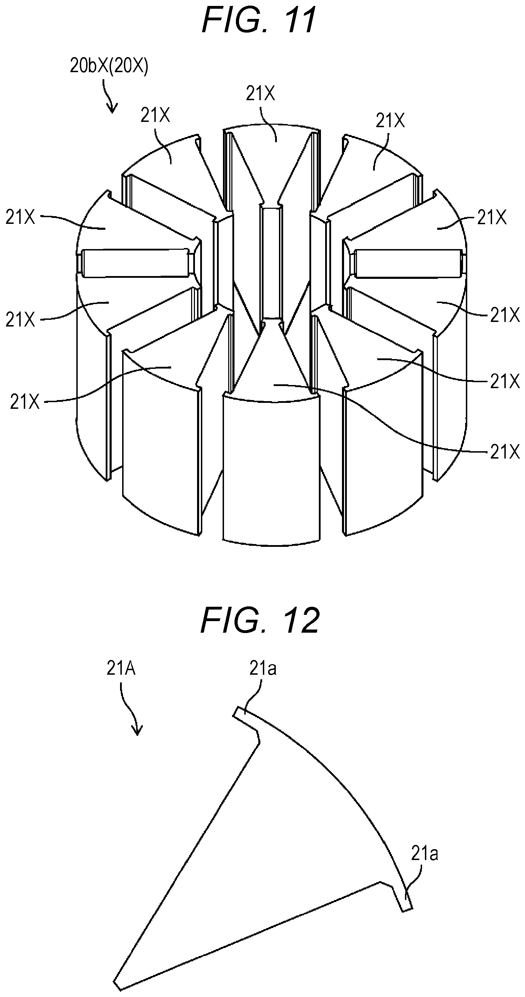

Conventionally, an IPM rotor in which a rotor core includes an inner core and an outer core has been known. In this case, a rotor core having a configuration in which an outer core is split into a plurality of parts has been proposed. Fig. 11 is a perspective view of outer core 20bX in rotor core 20X of a comparative example. For example, as illustrated in Fig. 11, a rotor has been proposed in which outer core 20bX of rotor core 20X is composed only of a plurality of split cores 21X. By configuring the outer core 20bX by a plurality of split cores 21X (magnetic pole parts) separated from each other like this, the yield of the material can be improved, and the material cost can be suppressed.

However, when outer core 20bX is split into a plurality of parts as in rotor core 20X illustrated in Fig. 11, the number of parts increases as compared with a rotor core having an outer core having a configuration in which magnetic pole part is annularly formed in a continuous manner. Thus, in rotor core 20X in which outer core 20bX is split into a plurality of parts, it is necessary to provide a gap in consideration of assembly workability between split cores 21X in addition to the tolerance of single split core 21X. Thus, assembling accuracy of the rotor degrades. As a result, the cogging torque and the torque ripple are affected. Thus, the performance of the motor degrades. For example, the rotational speed becomes unstable to decrease controllability, or noise and vibration increase.

Thus, as a result of intensive studies by the inventors of the present invention, an IPM rotor having a novel structure capable of improving the assembling accuracy of a rotor as well as suppressing the material cost by using a split core for the rotor core has been found.

Specifically, rotor core 20 in rotor 3 according to the present exemplary embodiment includes inner core 20a through which rotary shaft 10 penetrates and outer core 20b that holds a plurality of magnets 30. Outer core 20b includes a plurality of first cores 21 annularly arranged around rotary shaft 10, and a pair of second cores 22 sandwiching the plurality of first cores 21 from the directions in which shaft center C of rotary shaft 10 extends. Each of the plurality of magnets 30 is inserted into gap 21c between two adjacent first cores 21 in the plurality of first cores 21. Each of the pair of second cores 22 includes a plurality of core parts 22a corresponding to the plurality of first cores 21 on a one-to-one basis, and a plurality of coupling parts 22b sequentially coupling two adjacent core parts 22a among the plurality of core parts 22a.

Outer core 20b of rotor core 20 configured as described above sandwiches the plurality of first cores 21 by the pair of second cores 22 having the plurality of coupling parts 22b sequentially coupling the plurality of core parts 22a in the circumferential direction while using the plurality of first cores 21 separated from each other. With this configuration, outer core 20b can be formed as one component. The plurality of first cores 21 are used in rotor core 20 in this manner, and thus, the material cost can be suppressed. In rotor core 20, outer core 20b can be handled as one component. Thus, it is possible to suppress a decrease in assembly accuracy when rotor core 20 and rotor 3 are assembled.

As described above, according to rotor 3 and motor 1 of the present exemplary embodiment, rotor core 20 having a novel structure is used, and thus, it is possible to suppress a decrease in assembly accuracy as well as suppressing material cost. As a result, it is possible to suppress degradation of the performance of the motor 1 due to deterioration of the cogging torque and the torque ripple caused by degradation of the assembly accuracy of the rotor 3 and the motor 1. For example, it is possible to suppress an increase in noise and vibration of motor 1.

In rotor 3 according to the present exemplary embodiment, the plurality of coupling parts 22b in second core 22 of outer core 20b include first coupling part 22b1 that couples the ends of two adjacent core parts 22a, the ends being positioned on the inner side in the radial direction.

With this configuration, in outer core 20b, magnet 30 inserted into gap 21c between two adjacent first cores 21 can be held by first coupling part 22b1 of second core 22.

In rotor 3 according to the present exemplary embodiment, the plurality of coupling parts 22b in second core 22 of outer core 20b further include second coupling part 22b2 that couples the ends positioned on the outer side in the radial direction of two adjacent core parts 22a.

With this configuration, in outer core 20b, magnet 30 inserted into gap 21c between the adjacent first cores 21 can be held not only by first coupling part 22b1 on the inner peripheral side but also by second coupling part 22b2 on the outer peripheral side. That is, magnet 30 can be sandwiched from the radial direction by first coupling part 22b1 and second coupling part 22b2 provided in the radial direction of second core 22. Thus, magnet 30 can be prevented from dropping off from rotor core 20.

In rotor 3 according to the present exemplary embodiment, as illustrated in Figs. 5 and 10, first coupling part 22b1 of second core 22 of outer core 20b is positioned outside with respect to the upper end of inner core 20a in the direction of shaft center C of rotary shaft 10. That is, first coupling part 22b1 of second core 22 of outer core 20b does not face inner core 20a in the radial direction.

With this configuration, the insulation distance between outer core 20b and inner core 20a can be increased as compared with the case where first coupling part 22b1 and inner core 20a face each other in the radial direction. This makes it possible to suppress the occurrence of electrolytic corrosion.

### (Modification)

Rotor 3 and motor 1 according to the present disclosure have been described above based on the exemplary embodiment. However, the present disclosure is not limited to the above-described exemplary embodiment.

For example, in the above-described exemplary embodiment, first core 21 in outer core 20b of rotor core 20 has second protrusion 21b protruding in the circumferential direction from the end positioned on the inner side in the radial direction. However, the first core is not limited to this example. Fig. 12 is a plan view of first core 21A in outer core 20bA of a rotor core according to a modification. Specifically, as illustrated in Fig. 12, first core 21A does not have to have second protrusion 21b protruding in the circumferential direction from the end positioned on the inner side in the radial direction.

When second protrusion 21b is present at the end of first core 21 positioned on the inner side in the radial direction as in the above-described exemplary embodiment, magnet 30 can be positioned by second protrusion 21b. On the other hand, the magnetic flux of magnet 30 flows to second protrusion 21b, resulting in a loss in magnetic flux generation for rotational torque. In contrast, as illustrated in Fig. 12, when first core 21A in which second protrusion 21b is not present at the end positioned on the inner side in the radial direction is used, the magnetic flux of magnet 30 does not flow to second protrusion 21b. Thus, a loss in magnetic flux generation for rotational torque can be eliminated. As a result, the performance of the motor can be further improved.

Moreover, as illustrated in Fig. 12, the distance (air gap) between the plurality of magnets 30 and stator 2 can be stabilized by using first core 21A in which second protrusion 21b is not present at the end positioned on the inner side in the radial direction. This point is described below.

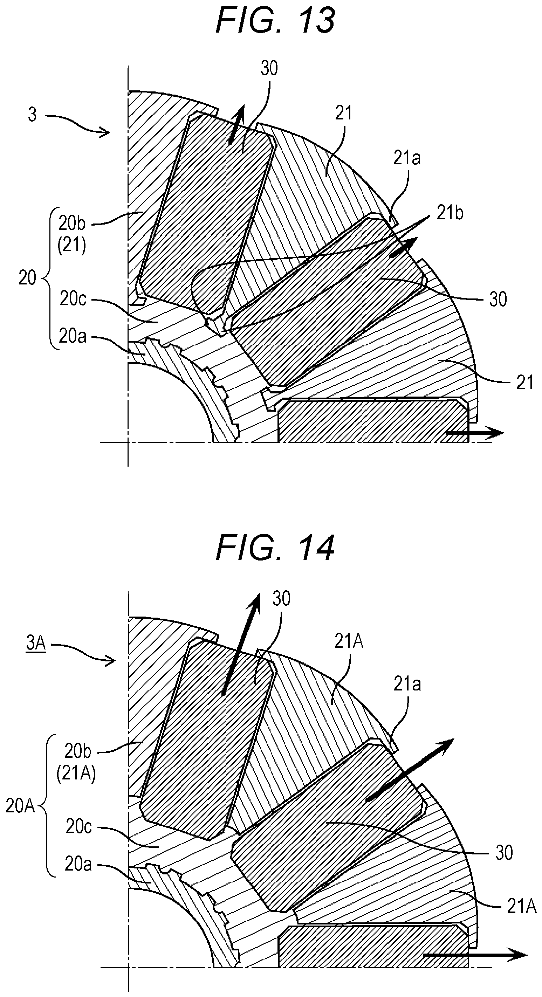

Fig. 13 is a 1/4 sectional view of rotor 3 according to the exemplary embodiment. Fig. 14 is a 1/4 sectional view of rotor 3A according to a modification. The position of magnet 30 in the radial direction is determined by (a) the magnetic attraction force between first protrusion 21a on the outer side of first core 21 and magnet 30 (that is, the magnetic force by which magnet 30 is pulled outward in the radial direction), and (b) the pressure on magnet 30 applied outward in the radial direction because of the flow of resin 20c when inner core 20a and outer core 20b are injection-molded with resin 20c. That is, the radial position of magnet 30 is determined such that magnet 30 is pulled outward in the radial direction. Thus, when second protrusion 21b is present at the end of first core 21 positioned on the inner side in the radial direction as in the above-described exemplary embodiment, resin 20c at the time of injection molding may be dammed by second protrusion 21b as illustrated in Fig. 13. As a result, the pressure to be applied to magnet 30 outward in the radial direction by resin 20c is weakened or becomes unstable, and the position of magnet 30 in the radial direction is not stabilized. That is, the radial positions of the plurality of magnets 30 vary. On the other hand, by using first core 21A in which second protrusion 21b illustrated in Fig. 12 is not present, the pressure on magnet 30 to be applied outward in the radial direction by resin 20c at the time of injection molding is increased as in rotor core 20A of rotor 3A illustrated in Fig. 14. Thus, the position of magnet 30 in the radial direction is stabilized. As a result, it is possible to suppress variations in the radial positions of plurality of magnets 30. Thus, the distance (air gap) between the plurality of magnets 30 and stator 2 can be stabilized. That is, the balance of the magnetic flux in the radial direction of rotor 3A is further stabilized. As a result, noise and vibration of rotor 3A can be further reduced.

In the above-described exemplary embodiment, magnet 30 inserted into rotor core 20 has a rectangular upper surface shape. However, the magnet is not limited to this example. For example, the shape in top view of magnet 30 may be trapezoidal or barrel-shaped.

In the above-described exemplary embodiment, winding 2b of stator 2 is wound around stator core 2a in concentrated winding. However, the winding is not limited to this example. For example, winding 2b of stator 2 may be wound around stator core 2a in distributed winding.

In the above-described exemplary embodiment, motor 1 is a molded motor. However, the motor is not limited to this example. The technique of the present disclosure can be applied to a motor other than a molded motor. That is, the technique of the present disclosure can also be applied to a motor in which stator 2 is not covered with molding resin 8.

In the above-described exemplary embodiment, a case where motor 1 is applied to a fan motor of an air conditioning unit has been described. However, the motor is not limited to this example. For example, motor 1 in the above-described exemplary embodiment can be used for various electric devices such as household devices, for example, vacuum cleaners and refrigerators, and industrial devices, for example, automobile devices and robots.

The present disclosure includes other embodiments obtained by making various modifications conceived by those skilled in the art with respect to the above-described exemplary embodiment and modifications, or other embodiments achieved by any combination of the constituent elements and functions in the exemplary embodiment without departing from the spirit of the present disclosure. The present disclosure also includes any combination of two or more claims within a scope not technically contradictory among a plurality of claims described in the claims at the time of filing of the present application. For example, when a claim in the cited form described in the claims at the time of filing of the present application is defined as a multiple dependent claim or a multiple-multiple dependent claim that refers to all preceding claims within a scope not technically contradictory, all combinations of the claims included in the multiple dependent claim or the multiple-multiple dependent claim are also included in the present disclosure.

### INDUSTRIAL APPLICABILITY

The motor according to the present disclosure can be widely used in devices including a motor in various fields including a fan motor used in an air conditioning unit or the like.

### REFERENCE MARKS IN THE DRAWINGS

1: motor
2: stator
2a: stator core
2b: winding
2c: insulator
3: rotor
4: first bearing
5: second bearing
6: first bracket
7: second bracket
8: molding resin
9: circuit board
10: rotary shaft
20: rotor core
20a: inner core
20a1: through hole
20a2: protrusion
20a3: recess
20a4: cutout
20b: outer core
20c: resin
20d: magnet insertion hole
21, 21A: first core
21a: first projection
21b: second projection
21c: gap
22: second core
22a: core part
22b: coupling part
22b1: first coupling part
22b2: second coupling part
22c: through hole
30: magnet
30a: outer side surface

## Claims

1. A rotor comprising:
a rotary shaft;
a rotor core through which the rotary shaft is inserted; and
a plurality of magnets disposed inside the rotor core and annularly arranged around the rotary shaft,
wherein
the rotor core includes
an inner core through which the rotary shaft penetrates, and
an outer core positioned on an outer side in a radial direction with respect to the inner core and holding the plurality of magnets,
the outer core includes
a plurality of first cores annularly arranged around the rotary shaft, and
a pair of second cores sandwiching the plurality of first cores from an axial direction of the rotary shaft,
each of the plurality of magnets is inserted into a gap between two adjacent first cores of the plurality of first cores, and
each of the pair of second cores includes a plurality of core parts corresponding to the plurality of first cores on a one-to-one basis, and a plurality of coupling parts sequentially coupling two adjacent core parts of the plurality of core parts.

2. The rotor according to Claim 1, wherein the plurality of coupling parts include a first coupling part that couples ends of the two adjacent core parts, the ends being positioned on an inner side in the radial direction.

3. The rotor according to Claim 2, wherein the first coupling part is positioned outside with respect to an upper end of the inner core in the axial direction of the rotary shaft.

4. The rotor according to Claim 2, wherein
the first coupling part is positioned on an opposite side from a side where the inner core is positioned with respect to an end surface of the inner core in the axial direction of the rotary shaft, and
the first coupling part is positioned on an outer peripheral side with respect to an inner side surface of the inner core in a radial direction intersecting the axial direction.

5. The rotor according to any one of Claims 2 to 4, wherein the plurality of coupling parts further include a second coupling part that couples ends of two adjacent core parts, the ends being positioned on the outer side in the radial direction.

6. The rotor according to any one of Claims 1 to 4, wherein each of the plurality of first cores includes a first protrusion protruding in a circumferential direction from an end positioned on the outer side in the radial direction.

7. The rotor according to Claim 6, wherein each of the plurality of first cores further includes a second protrusion protruding in the circumferential direction from an end positioned on an inner side in the radial direction.

8. The rotor according to Claim 6, wherein each of the plurality of first cores has no protrusion protruding in the circumferential direction from an end positioned on an inner side in the radial direction.

9. The rotor according to any one of Claims 1 to 4, wherein
the inner core and the outer core are integrally formed of resin, and
a plurality of recesses and a plurality of protrusions are formed on an outer peripheral surface of the inner core along a circumferential direction.

10. The rotor according to Claim 9, wherein
each of the plurality of recesses formed on the outer peripheral surface of the inner core is positioned to face a corresponding one of ends of the plurality of first cores, the ends being positioned on an inner side in the radial direction, and
each of the plurality of protrusions formed on the outer peripheral surface of the inner core is positioned to face a corresponding one of the plurality of magnets each inserted into the gap between two adjacent first cores of the plurality of first cores.

11. The rotor according to Claim 9, wherein the outer peripheral surface of the inner core is provided with a cutout for determining a position of a mold pin when the inner core and the outer core are integrally molded with the resin.

12. A motor comprising:
the rotor according to any one of Claims 1 to 4; and
a stator that generates a magnetic force that acts on the rotor.
